(19) **Europäisches Patentamt**

**European Patent Office**

**Office européen des brevets**

(11) **EP 1 291 545 B1**

(12) **FASCICULE DE BREVET EUROPEEN**

(45) Date de publication et mention
de la délivrance du brevet:
**17.08.2005 Bulletin 2005/33**

(51) Int Cl.⁷: **F16F 7/12**, B64D 27/00

(21) Numéro de dépôt: **02292216.5**

(22) Date de dépôt: **10.09.2002**

(54) **Barre de liaison à absorption d'énergie, et giravion équipé de telles barres de liaison comme barres de suspension d'une boîte de transmission**

Energieabsorbierendes Verbindungsglied und Hubschrauber mit solchen Verbindungsgliedern sowie Aufhängungsglieder eines Übertragungssystem

Energy absorbing connecting link and helicopter with such connecting links used as suspending links of a transmission unit

(84) Etats contractants désignés:
**GB IT**

(30) Priorité: **11.09.2001 FR 0111716**

(43) Date de publication de la demande:
**12.03.2003 Bulletin 2003/11**

(73) Titulaire: **EUROCOPTER**
**13725 Marignane Cédex (FR)**

(72) Inventeurs:
• **Struzik, Alain**
**13100 Aix en Provence (FR)**
• **Scala, Vincent**
**13680 Lancon de Provence (FR)**
• **Salvy, Michel**
**13700 Marignane (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**FR-A- 2 629 162** **FR-A- 2 795 793**
**US-A- 3 752 462**

• **PATENT ABSTRACTS OF JAPAN vol. 008, no. 201 (M-325), 14 septembre 1984 (1984-09-14) & JP 59 089847 A (TOSHIBA KK), 24 mai 1984 (1984-05-24)**

## Description

L'invention concerne une barre de liaison à absorption d'énergie, destinée à relier deux organes et apte à être sollicitée en traction/compression axiale entre ces organes, de sorte à absorber de l'énergie, en cas de choc ou d'impact sur l'un au moins des organes reliés par la barre et qui serait de nature à développer dans cette dernière une charge en compression supérieure à un seuil déterminé, de sorte que l'énergie de choc ou d'impact ne soit pas intégralement transmise par la barre de liaison de l'un à l'autre des deux organes qu'elle relie, et de préférence de sorte à écrêter l'effort transmis.

A titre d'application pour laquelle la barre de liaison selon l'invention présente un grand intérêt pour la Demanderesse, l'invention concerne également l'utilisation de cette barre de liaison comme barre de suspension d'une boîte de transmission principale sur la structure d'un giravion, et de préférence un hélicoptère, de sorte que l'invention est décrite et expliquée ci-après plus particulièrement dans cette application.

Plus précisément, la barre de liaison à absorption d'énergie selon l'invention est décrite dans son application comme barre de suspension dite « anti-crash », car destinée à remplir ses fonctions d'absorption d'énergie et de limitation d'effort transmis en cas d'écrasement d'un giravion, étant bien entendu que le champ d'application d'une telle barre de liaison à absorption d'énergie n'est pas limité à la protection des giravions, ou tout au moins d'une partie de ces derniers, en cas de « crash » ou d'écrasement.

D'une manière générale et schématique, lorsqu'un corps heurte le sol, il subit des efforts d'inertie qui sont fonction de l'énergie cinétique accumulée par ce corps avant l'impact et de sa déformation occasionnée par l'impact, selon la formule suivante :

$$\tfrac{1}{2}\mathrm{m}(V^2 - Vo^2) = \int_{o}^{D} F(x).dx \,,$$

où $\tfrac{1}{2}mVo^2$ est l'énergie cinétique du corps avant l'impact, $\tfrac{1}{2}mV^2$ est l'énergie cinétique du corps après l'impact, cette énergie étant nulle après l'écrasement d'un aéronef, F(x) représente les efforts d'inertie exercés sur le corps, et D est la déformation du corps provoquée par l'impact.

De cette formule générale, il se déduit que les efforts d'inertie F(x) sont d'autant plus grands que la déformation D du corps est plus faible.

Si l'on considère l'écrasement au sol ou crash d'un giravion, en particulier d'un hélicoptère, pour assurer la survie de l'équipage et des passagers du giravion, il est nécessaire de préserver le volume de la cabine du giravion, pour éviter l'écrasement des personnes qui l'occupent, limiter les accélérations subies par l'équipage et les passagers à un niveau supportable, et préserver l'intégrité des réservoirs de carburant afin d'éviter tout incendie ou explosion.

Or, lors d'un impact d'un giravion avec le sol, la cabine du giravion est soumise à des efforts introduits en particulier par le train d'atterrissage, le contact de la structure du giravion avec le sol, et tous éléments mécaniques fixés sur le dessus de la structure du giravion, tels que, dans le cas d'un hélicoptère par exemple, les éléments du groupe moto-propulseur, le ou les rotors principaux et la ou les boîtes de transmission principales.

En effet, on sait que sur les giravions de l'état de la technique, et en particulier les hélicoptères, les ensembles mécaniques dits supérieurs, à savoir les moteurs, rotors et boîtes de transmission principales, sont liés à la structure des giravions en étant boulonnés directement sur cette structure ou par un dispositif de liaison comportant un ensemble d'au moins trois barres de suspension rigides, indéformables, rectilignes et obliques, réparties autour de la boîte de transmission, et inclinées de sorte à converger les unes vers les autres du côté de leur extrémité supérieure, par laquelle chaque barre est reliée de manière articulée à la boîte de transmission, tandis que par son extrémité inférieure chaque barre est reliée de manière articulée à la structure du giravion.

Généralement, chaque barre de suspension est articulée par son extrémité supérieure directement sur la boîte de transmission principale, ou, en variante, sur un levier supportant un résonateur à masse battante et lui-même monté pivotant sur la boîte de transmission principale, comme décrit par exemple dans US-5,190,244 et US-6,145,785, et, par son extrémité inférieure, soit directement sur la structure du giravion, comme décrit dans FR 2 232 481, EP 718 187 et US-5,782,430, soit sur un levier supportant un résonateur à masse battante et lui-même monté pivotant sur la structure du giravion, comme décrit dans US-4,431,148, US-4,458,862, US-4,720,060, FR 2 777 861, FR 2 787 762 et FR 2 795 386, auxquels on se reportera pour davantage de précisions à ce sujet.

Actuellement, les mesures de protection contre le crash adoptées sur les hélicoptères visent à permettre l'absorption d'énergie par le train d'atterrissage, pour limiter les efforts introduits dans la structure de l'hélicoptère, l'absorption d'énergie par la partie de structure sous la cabine, dénommée barque, pour limiter les efforts introduits dans la structure de la cabine, et le dimensionnement de la structure de la cabine pour résister à son écrasement par les ensembles mécaniques supérieurs précités, liés à cette structure par des moyens indéformables, notamment les barres de suspension précitées.

En effet, lors d'un crash, les efforts d'inertie provenant desdits éléments mécaniques supérieurs sont très importants, en raison de la masse de ces éléments et de la rigidité de leur liaison avec la structure de la cabine.

Si l'on veut préserver le volume de la cabine pour éviter l'écrasement de ses occupants, le dimensionnement initial de la structure, pour résister aux efforts normaux de vol, n'est pas suffisant. Il est nécessaire de surdimensionner la structure, afin qu'elle puisse résister aux efforts lors du crash, ce qui se traduit par un alourdissement très sensible de cette structure.

Un but dé l'invention est de proposer une barre de liaison à absorption d'énergie, dont l'utilisation comme barre de suspension d'une boîte de transmission principale sur une structure d'un giravion, dans le cadre d'un dispositif de liaison anti-crash, permet de préserver le volume de la cabine du giravion lors de son écrasement au sol, par le fait que les ensembles mécaniques supérieurs peuvent être liés à la cabine du giravion au moyen de telles barres de liaisons absorbant l'énergie cinétique de ces ensembles mécaniques supérieurs, et de préférence également écrêtant les efforts transmis à la cabine.

Par ailleurs, un autre but de l'invention est de proposer une barre de liaison à absorption d'énergie qui, lorsqu'elle est utilisée pour constituer un dispositif anti-crash, protégeant la cabine d'un giravion de l'écrasement par les éléments mécaniques supérieurs précités, remédie simultanément à un certain nombre d'inconvénients de dispositifs « anti-crash » connus, tels que présentés ci-dessous.

Ces dispositifs anti-crash connus ont tous pour fonction d'absorber de l'énergie, représentée par le produit d'un effort par une déformation.

Pour limiter l'effort transmis à une structure, et qui risque de la détériorer, il est nécessaire de permettre une certaine déformation, et les dispositifs anti-crash connus et introduisant une déformation sont de deux types :

- un type à déformation élastique d'au moins un organe de liaison, et
- un type à déformation plastique d'au moins un organe de liaison.

Les inconvénients principaux des dispositifs connus à déformation élastique, comprenant tout système de ressort, sont qu'ils ne dissipent pas une proportion importante de l'énergie qu'ils reçoivent, car ils emmagasinent cette énergie puis la restituent, dans sa majeure partie, ce qui se traduit, dans la pratique, par un rebond après l'impact initial, qui est ainsi suivi d'une succession d'impacts secondaires sur des organes déjà fragilisés par l'impact initial. En outre, par rapport à un dispositif d'absorption d'énergie par déformation plastique, la course nécessaire pour absorber une même quantité d'énergie dans un dispositif à déformation élastique est environ deux fois plus grande, en raison de la différence des aires sous les courbes exprimant, dans les deux cas, l'effort en fonction de la déformation, ces aires étant représentatives des énergies absorbées. Or une course aussi importante n'est pas toujours compatible avec les contraintes d'encombrement du dispositif d'absorption d'énergie.

Concernant les dispositifs connus d'absorption d'énergie par déformation plastique, ceux proposés dans WO 97/28983 pour l'équipement de sièges de véhicules, sont des dispositifs triangulés comportant une bielle télescopique de limitation de charge et une bielle de traction se déformant par striction. Si de tels dispositifs conviennent au support de sièges, dont la masse est limitée, par contre ils ne conviennent pas pour absorber les fortes énergies transmises par les éléments mécaniques supérieurs à la structure d'une cabine de giravion, en cas de crash, car alors la masse de tels dispositifs et leur encombrement seraient considérables.

Les sièges anti-crash de première génération pour hélicoptères ont été équipés de dispositifs d'absorption d'énergie à déformation plastique comprenant des systèmes à bloc d'élastomère coopérant avec un poinçon, ou des systèmes à écrasement de billes, dont les rendements sont insuffisants, à cause de la faible quantité d'énergie absorbable par unité de volume du matériau plastiquement déformé, pour être utilisable pour la protection d'une cabine de giravion contre son écrasement par les éléments mécaniques supérieurs.

Par le brevet français FR 2 795 793, on connaît une barre de liaison à absorption d'énergie, du type présenté ci-dessus, et comprenant un corps rigide sensiblement rectiligne, muni à l'une de ses deux extrémités axiales de moyens de liaison à l'un des deux organes que la barre de liaison est destinée à relier, et comportant au moins une portion évidée logeant au moins un élément absorbeur d'énergie par déformation plastique en compression, et au moins un piston, en regard dudit élément absorbeur d'énergie dans ladite portion évidée, et solidaire en déplacement de moyens de liaison à l'autre des deux organes, de sorte que sous un effort de compression supérieur à un seuil de compression, la barre de liaison se raccourcit axialement et entraîne un déplacement dudit piston, de sorte que le piston écrase et déforme plastiquement ledit élément absorbeur d'énergie.

Dans FR 2 795 793, la barre de liaison, également dénommée biellette fusible à absorption d'énergie par déformation plastique d'organes dits fusibles, est susceptible d'absorber un choc aussi bien en traction qu'en compression, du fait de la structure de cette biellette fusible, dont le corps est qualifié de femelle, car présentant une cavité cylindrique fermée, du côté opposé à des moyens de liaison avec oreille et palier à rotule à une extrémité axiale du corps, par un couvercle traversé par une tige coulissant axialement dans le corps et au travers du couvercle. Cette tige est solidaire, à son extrémité axiale externe au corps, d'autres moyens de liaison (un second organe de fixation avec oreille et palier à rotule), et, à l'intérieur de la cavité du corps, du piston, avec deux organes fusibles, ou éléments absorbeurs d'énergie, disposés respectivement de part et d'autre du piston, dans la cavité du corps et autour de la tige.

Ces organes fusibles, dont l'un est sollicité en compression, et l'autre en traction, sont chacun réalisés sous la forme d'un manchon métallique avec des rainures axiales réparties en direction circonférentielle sur le pourtour du manchon et séparées d'une certaine distance en fonction de l'épaisseur du manchon métallique, qui est ainsi déformable en flambage pour absorber, par déformation plastique, l'énergie de choc ou d'impact appliquée sur les organes de liaison aux extrémités axiales de la barre de liaison.

Les organes fusibles sont donc deux éléments, qui sont chacun déformables en flambage et réalisés sous la forme d'un élément absorbeur d'énergie équivalent à un ensemble de poutres axiales parallèles encastrées, les poutres étant délimitées par des rainures ménagées dans ces manchons métalliques.

Une telle barre de liaison à absorption d'énergie selon FR 2 795 793 présente l'inconvénient majeur que l'ensemble constitué par sa tige et son piston transmet directement les efforts axiaux provenant de la structure aux organes fusibles, qu'il s'agisse des efforts normaux de vol ou des efforts de crash. Les organes fusibles sont sollicités par tous les efforts (de vol ou de crash), ce qui ne permet pas d'assurer un découplage des fonctions entre la transmission des efforts en vol normal et l'absorption des efforts de crash.

Dans FR 2 795 793, les organes fusibles doivent être conçus et dimensionnés pour supporter aussi les charges normales, en vol, qui, dans le cas d'un hélicoptère, comportent une grande part de sollicitations dynamiques (fatigue), ce qui limite le choix technologique des organes fusibles et complique leur dimensionnement.

Le problème à la base de la présente invention est de remédier aux inconvénients des barres de liaison à absorption d'énergie de l'état de la technique tel que présenté ci-dessus, et en particulier de permettre un découplage des fonctions entre le corps de la barre de liaison, qui transmet les charges normales en vol, et un élément absorbeur d'énergie, qui n'est sollicité que par les efforts de crash, de sorte que sa structure et son dimensionnement peuvent être optimisés à cet effet.

Ces buts sont atteints à l'aide d'une barre de liaison à absorption d'énergie, du type précité et connu par FR 2 795 793, et qui se caractérise en ce que le corps comporte également au moins une portion de flambage, à effort de flambage calibré correspondant audit seuil d'effort en compression, et ledit piston est également solidaire en déplacement d'une partie d'extrémité axiale rigide dudit corps, de sorte que sous un effort de compression supérieur audit effort de flambage calibré, ladite au moins une portion de flambage se déforme en entraînant le raccourcissement axial de ladite barre de liaison et le déplacement dudit piston avec ladite partie d'extrémité axiale rigide du corps pour écraser et déformer plastiquement ledit élément absorbeur d'énergie.

Par comparaison avec la structure de la barre de liaison décrite dans FR 2 795 793, une caractéristique essentielle de la barre de liaison selon l'invention est que son corps comprend ladite au moins une portion de flambage, dont l'effort de flambage est calibré et correspond au seuil d'effort en compression auquel la barre de liaison à absorption d'énergie doit être sensible, car, dans l'invention, cette portion de flambage doit d'abord flamber pour que le piston puisse transmettre des efforts à l'élément absorbeur d'énergie, lequel n'est donc sollicité que par les efforts de crash, tandis qu'en vol normal, c'est uniquement le corps de la barre qui transmet les efforts, d'où un découplage des fonctions précitées. Cette différence est essentielle, car elle permet d'optimiser le dimensionnement et le choix technologique de l'élément absorbeur d'énergie, dont le rôle unique est d'absorber l'énergie du crash.

On peut ainsi réduire et contrôler, par la barre de liaison à absorption d'énergie, le niveau d'effort introduit par l'un des deux organes qu'elle relie vers l'autre.

Afin d'éviter tout risque de déversement de la barre de liaison au cours de son flambage, il est avantageux que ledit piston soit guidé sensiblement axialement, au cours dudit flambage de ladite portion de flambage, par des moyens de guidage dans le corps de la barre.

Dans un mode de réalisation avantageusement simple et économique, lesdits moyens de guidage du piston comprennent une tige rigide reliant le piston à ladite partie d'extrémité axiale rigide du corps, et s'étendant sensiblement axialement dans une partie tubulaire du corps, de sorte à guider sensiblement axialement les déplacements dudit piston par rapport audit élément absorbeur d'énergie.

Afin de limiter l'encombrement axial de la barre, ladite partie tubulaire du corps guidant ladite tige rigide liée au piston définit avantageusement au moins partiellement ladite portion de flambage.

Cette portion de flambage peut être réalisée de toute manière connue de l'homme du métier, et être avantageusement délimitée par au moins un amincissement localisé de l'épaisseur de la paroi du corps.

De manière avantageusement simple et économique, tout en permettant un bon dimensionnement de la barre de liaison afin de respecter l'effort de flambage désiré dans un encombrement imposé, ledit amincissement localisé d'épaisseur est avantageusement défini par l'un au moins des moyens suivants: entaille, rainure, fente, strie sensiblement axiales, profil axial ondulé, et trou dans la paroi du corps.

De plus, ou alternativement, ladite portion de flambage peut être au moins partiellement constituée d'un matériau différent de celui constituant le reste du corps de la barre, et/ou ayant subi au moins localement un traitement (en particulier métallurgique), et/ou peut présenter une forme géométrique appropriée à initier et localiser le flambage.

D'une manière générale, la portion de flambage peut être au moins partiellement constituée d'un matériau ayant subi un traitement particulier, rendant ses caractéristiques différentes de celles du reste du corps de la barre.

Avantageusement de plus, ledit au moins un élément absorbeur d'énergie présente des caractéristiques d'écrasement à effort sensiblement constant, sur la majeure partie de la course de flambage, de sorte que la barre de liaison assure un écrêtage d'effort.

D'une manière générale, ledit élément absorbeur d'énergie peut comprendre au moins un matériau élastomère, comme proposé par exemple dans EP 110 233, et/ou un volume d'un fluide, de préférence visqueux, et/ou un matériau composite, tel que proposé par exemple dans EP 322 979, ou encore comprenant au moins une matière organique et/ou au moins une céramique et/ou au moins un matériau métallique et/ou des fibres de renfort minérales ou organique, à caractéristiques mécaniques élevées.

Cependant, afin que la quantité d'énergie globale absorbée soit importante, pour un encombrement réduit de l'élément absorbeur d'énergie, ce dernier comprend avantageusement au moins un élément à structure en nid d'abeille, dont les alvéoles contiguës sont orientées sensiblement axialement dans ledit corps, et de préférence métallique ou composite, l'avantage supplémentaire d'un tel matériau absorbeur d'énergie étant qu'il permet également l'écrêtage de l'effort, et son maintien à un niveau sensiblement constant pendant l'écrasement.

De préférence, ladite portion évidée du corps est une autre partie creuse ou tubulaire de ce corps, qui renferme ledit au moins un élément absorbeur d'énergie, et cette autre partie creuse ou tubulaire du corps peut être une partie renflée, qui est délimitée, du côté opposé au piston, par un fond, solidaire de l'autre partie d'extrémité rigide du corps, et contre lequel prend appui ledit élément absorbeur d'énergie.

Une telle barre de liaison à absorption d'énergie se prête avantageusement à son application comme barre de suspension anti-crash de boîte de transmission principale sur la structure d'un giravion tel qu'un hélicoptère, en étant destinée à être reliée, de manière articulée, par une extrémité à ladite boîte de transmission, et, par son autre extrémité, à la structure du giravion, de sorte qu'en introduisant une absorption d'énergie dans la liaison entre cette structure et la boîte de transmission principale, la barre de liaison selon l'invention permet de réduire et de contrôler le niveau d'effort introduit par les ensembles mécaniques supérieurs dans la structure du giravion, en cas de crash. Grâce à des barres de suspension constituées de barres de liaison à absorption d'énergie selon l'invention, il est possible de dimensionner un dispositif de liaison entre la boîte de transmission principale et la structure du giravion qui puisse absorber la quantité requise d'énergie tout en respectant l'effort de flambage désiré dans un encombrement imposé.

L'invention a donc également pour objet un giravion, de préférence un hélicoptère, comprenant une structure sur laquelle au moins une boîte de transmission principale, pour l'entraînement en rotation d'au moins un rotor principal du giravion, est suspendue par plusieurs barres de suspension, dont chacune est reliée, de manière articulée, par une extrémité à ladite boîte de transmission et, par son autre extrémité, à ladite structure, le giravion étant caractérisé en ce que l'une au moins desdites barres de suspension est une barre de liaison à absorption d'énergie selon l'invention et telle que définie ci-dessus.

D'autres avantages et caractéristiques de l'invention ressortiront de la description donnée ci-dessous, à titre non limitatif, d'un exemple de barre de liaison à absorption d'énergie utilisée comme barre de suspension de la boîte de transmission principale d'un hélicoptère, et décrite en référence aux dessins annexés sur lesquels :

- les figures 1 et 2 sont des vues schématiques et partielles, respectivement, en élévation latérale et en perspective, d'un dispositif de suspension à barres rectilignes et obliques pour boîte de transmission principale et rotor d'hélicoptère,
- la figure 3 est une vue schématique en élévation latérale d'un premier exemple de barre de liaison à absorption d'énergie, utilisable comme barre de suspension dans un dispositif selon les figures 1 et 2,
- la figure 4 est une vue schématique en coupe axiale de la barre de la figure 3,
- la figure 5 est une vue analogue à la figure 4 mais représentant la barre après déformation en flambage et absorption d'énergie par écrasement d'un élément absorbeur d'énergie par déformation plastique en compression,
- la figure 6 est une vue analogue à la figure 3 d'un autre exemple de barre selon l'invention, et
- la figure 7 est une vue en coupe axiale et partielle de la barre de la figure 6.

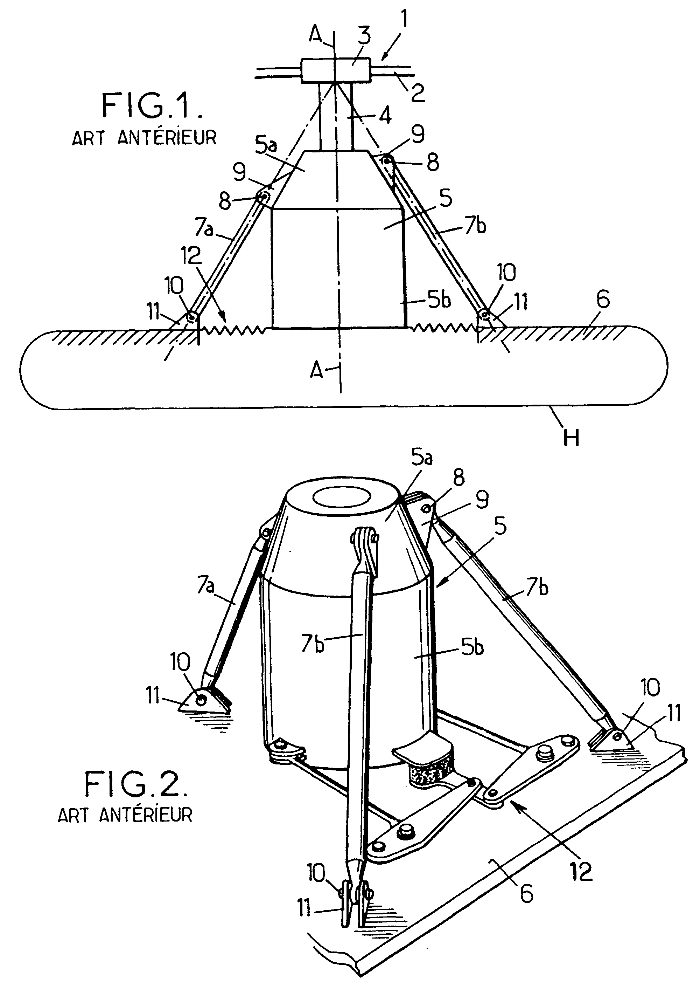

La figure 1 représente un rotor 1 principal d'hélicoptère, dont les pales 2 sont reliées à un moyeu 3 solidaire en rotation de l'extrémité supérieure d'un mât rotor 4, qui est supporté par sa base dans une boîte de transmission principale 5 reliée, de manière non représentée, par un arbre de transmission au groupe motopropulseur de l'hélicoptère H (représenté schématiquement), à titre d'exemple de giravion. La boîte de transmission 5 est coaxiale au mât 4 autour de son axe A-A, et l'entraîne en rotation autour de cet axe, qui est l'axe de rotation du rotor. Cette boîte de transmission 5 est, comme également représenté sur la figure 2, suspendue sur le plancher mécanique 6, à la partie supérieure de la structure de la cabine de l'hélicoptère, par un dispositif de suspension connu, qui comprend un jeu de quatre barres de suspension, rectilignes et rigides, réparties autour de la boîte 5 et disposées en oblique par rapport à l'axe de rotation A-A, de sorte à converger vers le dessus de la boîte 5 et l'axe de rotation A-A.

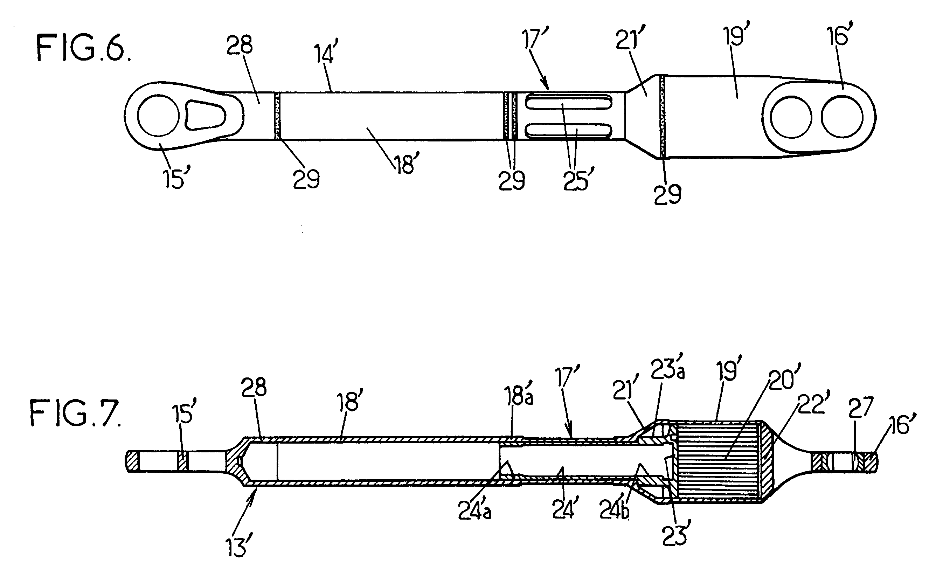

Dans cet exemple, qui est décrit dans EP 0 718 187, dont les figures 1 et 5 correspondent respectivement aux figures 1 et 2 de la présente demande, ces barres comprennent deux barres avant 7a, disposées vers l'avant (sur la gauche de la figure 1) de l'hélicoptère par rapport à la boîte 5, et deux barres arrières 7b, plus longues que les barres avant 7a. Chaque barre 7a ou 7b est reliée à la partie supérieure tronconique 5a du carter de la boîte 5 par son extrémité supérieure, liée par une articulation à rotule 8 à une patte d'ancrage 9 en saillie latérale sur la partie supérieure 5a de la boîte 5, et chaque barre 7a ou 7b est reliée par son extrémité inférieure au plancher mécanique 6 du fuselage par une articulation à rotule 10 la reliant à un support structural 11 du fuselage, par exemple une ferrure d'attache structurale rivée ou boulonnée sur le plancher mécanique 6 au-dessus de la cabine de l'hélicoptère.

Ainsi, l'ensemble constitué du rotor 1, du mât 4 et de la boîte de transmission 5 est suspendu à la structure 6 par le jeu des barres obliques 7a et 7b, dont les axes convergent sensiblement en un point autour duquel l'ensemble suspendu peut osciller.

Le dispositif de suspension connu comprend également un dispositif de liaison 12 reliant la base 5b de forme générale cylindrique du carter de la boîte 5 au fuselage 6, ce dispositif 12 comprenant au moins une liaison élastique autorisant les déplacements de la base 5b de la boîte 5 avec rappel élastique vers l'avant et vers l'arrière de l'hélicoptère et/ou latéralement, ainsi que des moyens de transfert du couple et constitués, dans cet exemple, de bielles, de leviers pivotants et d'un bloc d'élastomère, comme plus précisément décrit dans EP 0 718 187 auquel on se reportera pour davantage de précisions à ce sujet.

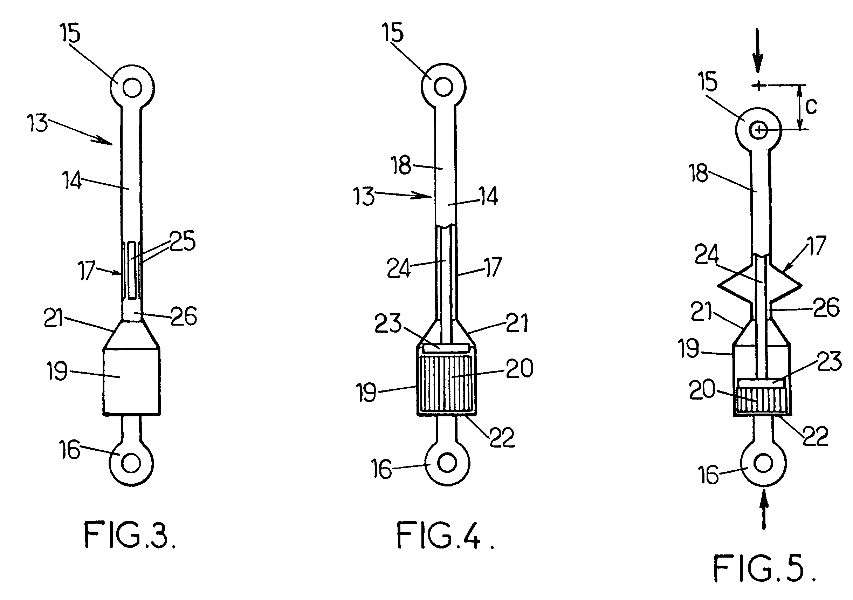

En cas de crash de l'hélicoptère, pour éviter l'écrasement de la cabine sous le plancher mécanique 6 par l'ensemble constitué par le rotor 1, le mât 4 et la boîte de transmission 5, chacune des barres de suspension 7a et 7b est réalisée sous la forme d'une barre de liaison à absorption d'énergie selon l'exemple des figures 3 à 5 ou celui des figures 6 et 7 décrites ci-dessous.

Dans l'exemple des figures 3 à 5, la barre de liaison à absorption d'énergie 13 comprend un corps 14 sensiblement rectiligne et en partie creux, qui est muni, à chacune de ses deux extrémités axiales, de moyens de liaison sous la forme d'un embout à oeil 15, à son extrémité supérieure sur les figures 3 à 5, ou 16 à son extrémité inférieure, et destiné à recevoir une rotule et/ou un axe de pivot, pour assurer la liaison articulée de l'embout 15 d'extrémité supérieure par exemple sur une patte 9 de la boîte de transmission principale 5 des figures 1 et 2, et de l'embout 16 d'extrémité inférieure sur un support structural 11 de la structure 6 de ces mêmes figures 1 et 2, bien que le sens du montage de la barre 13 puisse être inversé, puisque ce sens de montage n'a aucune influence sur son fonctionnement, comme on le comprendra ci-dessous.

Le corps 14 est rigide, sauf au niveau d'une portion tubulaire 17, dite portion de flambage, car sa forme géométrique et/ou sa structure sont agencées pour que cette portion tubulaire axiale 17 présente un effort de flambage calibré, qui correspond à un seuil d'effort en compression tel que, lorsque le corps 14 de la barre 13 est sollicité en compression par un effort sensiblement axial supérieur au seuil précité, cette portion de flambage 17 se déforme en flambage, comme schématiquement représenté sur la figure 5, et entraîne alors un raccourcissement axial de la barre 13, dont le corps 14 est, en dehors de la portion de flambage 17, sensiblement indéformable sous la sollicitation des efforts maximaux que cette barre 13 est destinée à encaisser.

La portion de flambage 17 s'étend axialement entre une partie d'extrémité supérieure rigide 18 du corps 14 et une partie tubulaire 19 renflée dans cet exemple de réalisation, délimitant une chambre axiale interne de forme cylindrique renfermant un élément 20 absorbeur d'énergie par déformation plastique en compression.

La portion de flambage tubulaire 17 s'étend dans le prolongement axial de la partie d'extrémité supérieure rigide 18, et se raccorde, par une partie tubulaire tronconique 21 évasée vers l'embout inférieur 16, à la partie tubulaire renflée 19, dont la chambre interne est fermée, vers l'embout inférieur 16, par un fond rigide 22 solidaire de la partie d'extrémité inférieure rigide munie de l'embout inférieur 16.

Un piston 23 est disposé dans la chambre de la partie renflée 19, au-dessus de l'élément absorbeur d'énergie 20, et ce piston rigide 23 est rigidement relié à la partie d'extrémité supérieure rigide 18 par une tige rigide axiale 24.

En fonctionnement normal sur hélicoptère, le corps 14 en partie tubulaire de la barre 13 est dimensionné pour supporter sans déformation sensible, du fait de sa grande rigidité, les efforts de traction et de compression correspondant aux charges de vol, dans le cas d'application des figures 1 et 2, où quatre barres telles que 13 supportent la boîte de transmission principale 5 et le rotor 1 de l'hélicoptère.

En cas de crash de l'hélicoptère, chaque barre 13, utilisée comme barre de suspension telle que 7a ou 7b, encaisse un effort axial provenant de la masse de l'ensemble dynamique constitué par les pales 2, le moyeu 3, et la boîte de transmission principale 5. Cet effort axial, qui est supérieur aux efforts de vol maximaux pour lesquels le corps 14 de la barre 13 a été dimensionné, et qui déterminent le seuil d'effort en compression de la portion de flambage 17, est donc supérieur à ce seuil d'effort en compression, de sorte qu'il entraîne le flambage de cette portion 17, qui présente axialement des amincissements localisés d'épaisseur de la paroi tubulaire du corps 14 à ce niveau, sous la forme d'entailles axiales 25 (voir figure 3) réparties sur la périphérie de cette portion de flambage 17.

En variante, ces entailles 25, qui donnent à la portion tubulaire 17 son aptitude à se déformer en flambage, peuvent être remplacées par ou associées à d'autres formes d'amincissements localisés de l'épaisseur de la paroi, afin de réduire la résistance en compression de cette portion tubulaire 17, par exemple par des stries, des fentes, des rainures, qui s'étendent toutes sensiblement axialement, des ondulations du profil axial de cette portion tubulaire, et/ou encore des trous, plusieurs formes différentes d'amincissement de la paroi, y compris des lumières ou des perçages ménagés dans la paroi, pouvant être associées.

En outre, il est également possible de réaliser cette portion de flambage tubulaire 17 en un matériau différent de celui constituant le reste du corps 14, et/ou d'appliquer au moins localement à cette portion de flambage 17 un traitement (métallurgique en particulier), et/ ou encore de donner à cette portion de flambage 17 une forme géométrique, en particulier de section transversale, qui soit apte à initier et localiser le flambage calibré souhaité dans cette portion 17.

Le flambage de cette portion 17 entraîne un raccourcissement axial de la barre 13, repéré en c sur la figure 5, et donc un déplacement du piston 23 avec la partie d'extrémité supérieure rigide 18 du corps 14, grâce à la tige rigide 24, qui guide sensiblement axialement le piston 23 dans ce déplacement en étant ellemême guidée dans la portion tubulaire de flambage 17 en cours de déformation. Par ce déplacement, le piston 23 écrase axialement l'élément absorbeur d'énergie 20 contre le fond 22, de sorte que de l'énergie est absorbée par la déformation plastique de l'élément 20, réalisé en un ou plusieurs matériaux et avec une structure tels que son écrasement s'effectue à effort sensiblement constant sur une certaine course d'écrasement. Ceci permet de limiter l'effort transmis axialement entre l'embout supérieur 15 et l'embout inférieur 16, à une certaine valeur durant une certaine course de déformation en compression de l'élément 20.

Au cours de cette déformation, le risque de déversement de la barre 13 pendant le flambage de la portion 17 est maîtrisé par le guidage du piston 23 dans la partie tubulaire renflée 19 du corps 14.

Le ou les matériaux ainsi que la structure de l'élément absorbeur d'énergie 20, et en particulier son épaisseur axiale, sont déterminés et calculés pour absorber une quantité d'énergie prédéterminée. On comprend que dans le cas du crash d'un hélicoptère, l'ensemble des barres 13 supportant la boîte de transmission principale 5 des figures 1 et 2 devra absorber l'énergie cinétique de cette boîte 5 et du rotor principal 1.

Afin de bien guider la tige 24 et le piston 23 axialement dans le corps 14 pendant le flambage de la portion 17, les entailles 25 de cette portion 17 ne s'étendent pas jusqu'à la partie de raccordement tubulaire tronconique 21, de sorte qu'une zone tubulaire 26 du corps 14 reste indéformable entre la portion de flambage 17 et la portion de raccordement tronconique 21, et cette zone tubulaire 26 assure un bon guidage axial de la tige 24.

Le corps 14 peut être en alliage ou acier inoxydable, ou encore en aluminium ou titane, sans que cette liste de métaux soit limitative, ou encore en un matériau composite à matrice métallique armée de fibres de renfort à caractéristiques mécaniques élevées, ou encore en composite à matrice d'une autre nature armée de fibres minérales ou organiques à caractéristiques mécaniques élevées, par exemple des fibres de carbone ou de verre, éventuellement tissées.

Le piston 23 et/ou la tige 24 peuvent être réalisés dans les mêmes matériaux que le corps 14, ou dans des matériaux différents, et si leur réalisation est métallique, le piston 23 peut être soudé à la tige 24 ellemême soudée à la partie d'extrémité axiale supérieure rigide 18 du corps 14, par exemple par un procédé de soudage à faisceaux d'électrons. En variante, le piston 23 peut être monté, par exemple par vissage, en bout de la tige 24 elle-même solidarisée par tout moyen approprié, à son extrémité opposée, à la partie d'extrémité supérieure rigide 18 du corps 14. En cas de réalisation en matériaux composites, le piston 23 et la tige 24 peuvent être réalisés d'une seule pièce avec la partie d'extrémité supérieure rigide 18 du corps 14.

L'élément 20 absorbeur d'énergie, permettant également l'écrêtage de l'effort axial de compression, est par exemple réalisé sous la forme d'un élément à structure en nid d'abeille, dont les alvéoles contiguës sont orientées sensiblement axialement dans la partie tubulaire renflée 19 du corps 14. De préférence, cet élément 20 en nid d'abeille est réalisé dans un matériau métallique, par exemple en acier, bien que l'aluminium ou le titane puisse également être utilisé pour réaliser cet élément 20 en nid d'abeille. Un élément 20 en nid d'abeille en acier présente une bonne efficacité, avec un effort d'écrasement particulièrement bien stabilisé et une aire (effort x déformation) qui est maximale, donc une grande absorption d'énergie.

Toutefois, en variante, cet élément 20 absorbeur d'énergie peut être réalisé en matériaux composites, notamment un composite comportant une résine organique, des céramiques et/ou des billes métalliques, ou encore un élément en nid d'abeille composite à matrice synthétique armée de fibres minérales ou organiques, ou encore un agencement à au moins un bloc d'élastomère, éventuellement alvéolé, ou encore être un élément incluant un volume donné d'un fluide visqueux, sans être limitatif.

Dans le cas où le corps 14, le piston 23 et la tige 24 sont métalliques, tous ces éléments peuvent être soudés par faisceaux d'électrons, cette technique de soudage permettant d'avoir peu de déformations après soudage et une optimisation de la gamme de barres de liaison 13 ainsi réalisées, sans retouche des éléments assemblés.

La barre de liaison 13 ainsi constituée présente l'avantage de deux modes de fonctionnement indépendants, qui sont le mode de fonctionnement normal en vol, et le mode de fonctionnement en cas de crash, ce qui permet d'optimiser chacun de ces deux modes de fonctionnement.

En mode normal, la barre de liaison 13 présente une grande rigidité, et peut travailler aussi bien en traction qu'en compression, ce qui n'est pas permis par la plupart des dispositifs « anti-crash » de l'état de la technique.

Sauf au niveau de sa partie tubulaire renflée 19, contenant le ou les matériaux écrasables constituant l'élément 20 absorbeur d'énergie, l'encombrement de cette barre 13 reste très proche de celui d'une barre de suspension telle que 7a ou 7b des figures 1 et 2, selon l'état de la technique, et résistant aux mêmes efforts nominaux. Mais cette partie renflée 19 de la barre de liaison 13 de l'invention peut être positionnée en fonction des contraintes d'encombrement. En particulier, comme les barres de suspension 7a et 7b d'une boîte de transmission principale 5 convergent les unes vers les autres du côté de leur extrémité supérieure, il peut être indiqué d'utiliser des barres 13 en disposant leur partie tubulaire renflée 19 du côté de leur extrémité inférieure, reliée à la structure de l'hélicoptère, dans des parties relativement dégagées du plancher mécanique.

En outre, dans certains cas d'application, les contraintes de dimensionnement n'imposent pas nécessairement un renflement de la partie 19, ce qui procure à cette barre 13 un encombrement encore plus proche de celui d'une barre selon l'état de la technique résistant aux mêmes efforts nominaux.

En configuration de crash, l'utilisation de barres de liaison telles que 13 permet, en introduisant une absorption d'énergie dans la liaison entre la boîte de transmission principale 5 et la structure 6, de réduire et de contrôler le niveau d'effort introduit par ces barres 13 dans la structure 6. Un dispositif de suspension comprenant de telles barres de liaison 13 permet donc de maîtriser trois paramètres, qui sont la quantité d'énergie globale absorbée, le niveau d'effort stabilisé pendant sensiblement toute la durée de l'absorption, et la longueur d'écrasement c (voir figure 5). De plus, la disposition du piston 23 à l'extrémité d'une tige 24 s'étendant sensiblement axialement dans une partie tubulaire 17-26 du corps 14 permet à l'ensemble de la barre 13 de rester sensiblement rectiligne pendant le crash, ce qui garantit son bon fonctionnement.

L'utilisation de barres de liaison telles que 13 comme barres de suspension d'une boîte de transmission principale sur la structure d'un hélicoptère permet un allègement global, grâce au dimensionnement moins sévère de la structure permis par la limitation des efforts d'inertie des ensembles mécaniques supérieurs qui sont transmis à la structure par les barres 13 lors d'un crash.

Enfin, il est possible de monter en rattrapage de telles barres de liaison à absorption d'énergie 13 à la place des barres de suspension conventionnelles équipant des hélicoptères déjà en service, pour augmenter les marges de dimensionnement en cas de crash et/ou pour respecter un renforcement des exigences de tenue au crash.

La barre de liaison à absorption d'énergie selon la réalisation des figures 6 et 7 est une variante de la barre 13 des figures 3 à 5, et qui s'en distingue essentiellement par la réalisation tubulaire non seulement de la partie d'extrémité axiale rigide 18' du corps 14' dont le piston 23' est solidaire en mouvement lors de la déformation en flambage de sa portion de flambage 17', mais également de la tige rigide 24', solidarisant le piston 23' à cette partie d'extrémité rigide tubulaire 18', à laquelle la tige 24', en forme de tronçon de tube, est soudée par une extrémité axiale 24'a à l'intérieur de l'extrémité 18'a de la partie d'extrémité tubulaire 18' qui est adjacente à la portion de flambage 17', tandis que l'autre extrémité 24'b de la tige tubulaire 24' est soudée à l'intérieur d'un manchon axial 23'a d'une seule pièce avec le piston 23' et s'étendant à l'intérieur de la partie tubulaire tronconique 21' raccordant sensiblement la portion de flambage 17' à la partie tubulaire renflée 19' qui renferme l'élément absorbeur d'énergie 20', en appui contre le fond 22' de l'autre extrémité axiale rigide du corps qui est constituée par l'embout 16' à rotule 27.

Comme dans l'exemple précédent, l'élément absorbeur d'énergie 20' est de préférence un élément à structure en nid d'abeille à alvéoles contiguës orientées axialement et de préférence en acier inoxydable.

Dans cette variante, l'embout à oeil 15' peut être d'une seule pièce avec un manchon borgne 28 soudé coaxialement dans le prolongement de la partie d'extrémité axiale rigide et tubulaire 18' du corps 14', cette partie 18' étant également soudée par faisceaux d'électrons à l'extrémité correspondante non seulement de la tige rigide tubulaire 24', mais également de la portion de flambage 17' délimitée, dans cet exemple également, par des entailles axiales 25', tandis que la partie tubulaire renflée 19' est également solidarisée en bout de la partie tubulaire tronconique 21' par une soudure par faisceaux d'électrons. Ces différentes lignes de soudure sont schématiquement repérées en 29 sur la figure 6.

Le fonctionnement de la barre de liaison 13' décrite en référence aux figures 6 et 7 est le même que celui décrit ci-dessus pour la barre 13 des figures 3 à 5, et son utilisation comme barre de suspension d'une boîte de transmission principale sur la structure d'un hélicoptère présente les mêmes avantages.

Dans une barre de liaison 13 ou 13', l'élément absorbeur d'énergie 20 ou 20' peut être, de par sa structure, écrasé et déformé plastiquement par flambage, comme c'est le cas des organes fusibles décrits dans FR 2 795 793, mais il ne doit pas être confondu avec ladite au moins une portion de flambage 17 ou 17' du corps 14 ou 14' de la barre de liaison, laquelle portion de flambage n'a pas d'équivalent dans FR 2 795 793.

Bien évidemment, une telle barre 13 ou 13' peut être utilisée non seulement comme barre de suspension telle que 7a ou 7b dans un dispositif de suspension selon EP 0 718 187, où l'extrémité supérieure de chaque barre de suspension est directement articulée sur la boîte de transmission principale, alors que son extrémité inférieure est directement articulée sur la structure, mais également dans des dispositifs de suspension tels que décrits dans les autres documents de brevets précités, dans lesquels l'extrémité supérieure de la barre de suspension peut être articulée sur un levier lui-même articulé sur la boîte de transmission principale 5, alors que l'extrémité inférieure de la barre est articulée directement sur la structure 6, ou encore dans lesquels l'extrémité inférieure de la barre de suspension est articulée sur un levier à résonateur à masse battante lui-même articulé sur la structure de l'hélicoptère, alors que l'extrémité supérieure de la barre de suspension est articulée directement sur la boîte de transmission principale.

## Revendications

1.   Barre de liaison à absorption d'énergie, destinée à relier deux organes (5, 6) et apte à être sollicitée en traction/compression axiale entre lesdits organes (5, 6), ladite barre (13, 13') comprenant un corps rigide (14, 14') sensiblement rectiligne, muni à l'une de ses deux extrémités axiales de moyens (16, 16') de liaison à l'un desdits organes (5, 6), et comportant au moins une portion évidée (19, 19') logeant au moins un élément absorbeur d'énergie (20, 20') par déformation plastique en compression, et au moins un piston (23, 23'), en regard dudit élément absorbeur d'énergie (20, 20') dans ladite portion évidée (19, 19'), et solidaire en déplacement de moyens de liaison (15, 15') à l'autre desdits organes (6, 5), de sorte que sous un effort de compression supérieur à un seuil de compression la barre de liaison (13, 13') se raccourcit axialement et entraîne un déplacement dudit piston (23, 23'), de sorte que le piston (23, 23') écrase et déforme plastiquement ledit élément absorbeur d'énergie (20, 20'),
**caractérisée en ce que** ledit corps (14, 14') comporte également au moins une portion de flambage (17, 17'), à effort de flambage calibré correspondant audit seuil d'effort en compression, et ledit piston (23, 23') est également solidaire en déplacement d'une partie d'extrémité axiale rigide (18, 18') dudit corps (14, 14'), de sorte que sous un effort de compression supérieur audit effort de flambage calibré, ladite au moins une portion de flambage (17, 17') se déforme en entraînant le raccourcissement axial de ladite barre de liaison (13, 13') et le déplacement dudit piston (23, 23') avec ladite partie d'extrémité axiale rigide (18, 18') du corps pour écraser et déformer plastiquement ledit élément absorbeur d'énergie (20, 20').

2.   Barre de liaison selon la revendication 1, **caractérisée en ce que** ledit piston (23, 23') est guidé sensiblement axialement au cours du flambage de ladite portion de flambage (17, 17') du corps (14, 14'), par des moyens de guidage (24, 24', 26) dans le corps (14, 14').

3.   Barre de liaison selon la revendication 2, **caractérisée en ce que** lesdits moyens de guidage du piston (23, 23') comprennent une tige rigide (24, 24') reliant le piston (23, 23') à ladite partie d'extrémité axiale rigide (18, 18') du corps (14, 14') et s'étendant sensiblement axialement dans une partie tubulaire (17-26 ; 17') du corps, de sorte à guider sensiblement axialement les déplacements dudit piston (23, 23') par rapport audit élément absorbeur d'énergie (20, 20').

4.   Barre de liaison selon la revendication 3, **caractérisée en ce que** ladite partie tubulaire (17-26, 17') du corps (14, 14') guidant ladite tige rigide (24, 24') liée au piston (23, 23') définit au moins partiellement ladite portion de flambage (17, 17').

5.   Barre de liaison selon l'une quelconque des revendications 1 à 4, **caractérisée en ce que** ladite portion de flambage (17, 17') est délimitée par au moins un amincissement localisé (25, 25') de l'épaisseur de la paroi tubulaire du corps (14, 14').

6.   Barre de liaison selon la revendication 5, **caractérisée en ce que** ledit amincissement localisé d'épaisseur est défini par l'un au moins des moyens suivants : entaille (25, 25'), rainure, fente, strie sensiblement axiales, profil axial ondulé et trou dans la paroi du corps (14, 14').

7.   Barre de liaison selon l'une quelconque des revendications 1 à 6, **caractérisée en ce que** ladite portion de flambage (17, 17') est au moins partiellement constituée d'un matériau différent de celui constituant le reste du corps (14, 14') de la barre (13, 13').

8.   Barre de liaison selon l'une quelconque des revendications 1 à 7, **caractérisée en ce que** ladite portion de flambage (17, 17') est au moins partiellement constituée d'un matériau ayant subi un traitement particulier, rendant ses caractéristiques différentes de celles du reste du corps (14, 14') de la barre (13, 13').

9.   Barre de liaison selon l'une quelconque des revendications 1 à 8, **caractérisée en ce que** ladite portion de flambage (17, 17') présente une forme géométrique appropriée à initier et localiser le flambage.

**10.** Barre de liaison selon l'une quelconque des revendications 1 à 9, **caractérisée en ce que** ledit au moins un élément absorbeur d'énergie (20, 20') présente des caractéristiques d'écrasement à effort sensiblement constant, de sorte que la barre de liaison (13, 13') assure un écrêtage d'effort.

**11.** Barre de liaison selon l'une quelconque des revendications 1 à 10, **caractérisée en ce que** ledit élément absorbeur d'énergie (20, 20') comprend au moins un élément à structure en nid d'abeille, dont les alvéoles contiguës sont orientées sensiblement axialement dans ledit corps (14, 14'), et de préférence métallique ou composite.

**12.** Barre de liaison selon l'une quelconque des revendications 1 à 11, **caractérisée en ce que** ledit élément absorbeur d'énergie (20, 20') comprend au moins un matériau élastomère et/ou un volume d'un fluide, de préférence visqueux, et/ou un matériau composite comportant au moins un matériau organique et/ou au moins une céramique et/ou au moins un matériau métallique.

**13.** Barre de liaison selon l'une des revendications 1 à 12, **caractérisée en ce que** ladite portion évidée du corps (14, 14') est une autre partie creuse ou tubulaire (19, 19') dudit corps qui renferme ledit au moins un élément absorbeur d'énergie (20, 20').

**14.** Barre de liaison selon la revendication 13, **caractérisée en ce que** ladite partie du corps (14, 14') renfermant ledit élément absorbeur d'énergie (20, 20') est une partie renflée (19, 19') du corps qui est délimitée, du côté opposé au piston (23, 23'), par un fond (22, 22'), solidaire de l'autre partie d'extrémité rigide (16, 16') du corps (14, 14'), et contre lequel prend appui ledit élément absorbeur d'énergie (20, 20').

**15.** Giravion, de préférence hélicoptère, comprenant une structure (6) sur laquelle au moins une boîte de transmission principale (5), pour l'entraînement en rotation d'au moins un rotor principal (1) du giravion (H), est suspendue par plusieurs barres de suspension (7a, 7b) dont chacune est reliée, de manière articulée, par une extrémité (15, 15') à ladite boîte de transmission (5) et, par son autre extrémité (16, 16'), à ladite structure (6), **caractérisé en ce que** l'une au moins desdites barres de suspension (7a, 7b) est une barre de liaison (13, 13') à absorption d'énergie selon l'une quelconque des revendications 1 à 14.

**Claims**

**1.** A connecting rod for absorbing energy, intended to connect two members (5, 6) and suitable for being urged by axial compression/traction between the said members (5, 6), the said rod (13, 13') comprising a rigid body (14, 14') which is substantially rectilinear and is equipped at one of its two axial ends with means (16, 16') for connection to one of the said members (5, 6) and has at least one hollowed portion (19, 19') housing at least one element (20, 20') for absorbing energy by plastic compressive deformation and at least one piston (23, 23') which is opposite the said element (20, 20') for absorbing energy in the said hollowed portion (19, 19') and moves in fixed relation to means (15, 15') for connection to the other of the said members (6, 5) such that in the event of a compressive force above a compression threshold the connecting rod (13, 13') is axially shortened and brings about displacement of the said piston (23, 23') such that the piston (23, 23') crushes and plastically deforms the said element (20, 20') for absorbing energy, **characterised in that** the said body (14, 14') also has at least one buckling portion (17, 17') whereof the buckling force is calibrated to correspond to the said compressive force threshold, and the said piston (23, 23') also moves in fixed relation to a rigid axial end part (18, 18') of the said body (14, 14') such that in the event of a compressive force above the said calibrated buckling force the said at least one buckling portion (17, 17') is deformed, bringing about axial shortening of the said connecting rod (13, 13') and displacement of the said piston (23, 23') with the said rigid axial end part (18, 18') of the body in order to crush and plastically deform the said element (20, 20') for absorbing energy.

**2.** A connecting rod according to Claim 1, **characterised in that** the said piston (23, 23') is guided substantially axially during buckling by the said buckling portion (17, 17') of the body (14, 14') by means (24, 24', 26) of guiding within the body (14, 14').

**3.** A connecting rod according to Claim 2, **characterised in that** the said means of guiding the piston (23, 23') comprise a rigid shank (24, 24') connecting the piston (23, 23') to the said rigid axial end part (18, 18') of the body (14, 14') and extending substantially axially in a tubular part (17 - 26; 17') of the body such that the displacements of the said piston (23, 23') are guided substantially axially with respect to the said element (20, 20') for absorbing energy.

**4.** A connecting rod according to Claim 3, **characterised in that** the said tubular part (17 - 26, 17') of the body (14, 14') guiding the said rigid shank (24, 24') connected to the piston (23, 23') at least partly defines the said buckling portion (17, 17').

5. A connecting rod according to any one of Claims 1 to 4, **characterised in that** the said buckling portion (17, 17') is delimited by at least one localised thinning (25, 25') of the thickness of the tubular wall of the body (14, 14').

6. A connecting rod according to Claim 5, **characterised in that** the said localised thinning of the thickness is defined by at least one of the following means: a substantially axial notch (25, 25'), groove, slot or mark, an undulating axial profile and a hole in the wall of the body (14, 14').

7. A connecting rod according to any one of Claims 1 to 6, **characterised in that** the said buckling portion (17, 17') is at least partly formed from a different material from that forming the rest of the body (14, 14') of the rod (13, 13').

8. A connecting rod according to any one of Claims 1 to 7, **characterised in that** the said buckling portion (17, 17') is at least partly formed from a material which has been subjected to a particular treatment making its properties different from those of the rest of the body (14, 14') of the rod (13, 13').

9. A connecting rod according to any one of Claims 1 to 8, **characterised in that** the said buckling portion (17, 17') has a geometric shape suitable for starting and localising the buckling.

10. A connecting rod according to any one of Claims 1 to 9, **characterised in that** the said at least one element (20, 20') for absorbing energy has properties of crushing at substantially constant force such that the connecting rod (13, 13') ensures that forces are evened out.

11. A connecting rod according to any one of Claims 1 to 10, **characterised in that** the said element (20, 20') for absorbing energy comprises at least one element having a honeycomb structure whereof the contiguous cells are oriented substantially axially in the said body (14, 14') and are preferably made of metal or composite material.

12. A connecting rod according to any one of Claims 1 to 11, **characterised in that** the said element (20, 20') for absorbing energy is made of at least one elastomer material and/or a volume of fluid, preferably a viscous fluid, and/or a composite material having at least one organic material and/or at least one ceramic and/or at least one metal material.

13. A connecting rod according to one of Claims 1 to 12, **characterised in that** the said hollowed portion of the body (14, 14') is a different hollow or tubular part (19, 19') of the said body which encloses the said at least one element (20, 20') for absorbing energy.

14. A connecting rod according to Claim 13, **characterised in that** the said part of the body (14, 14') enclosing the said element (20, 20') for absorbing energy is a bulbous part (19, 19') of the body which is delimited, on the opposite side to the piston (23, 23'), by a base (22, 22') which is in fixed relation to the other rigid end part (16, 16') of the body (14, 14') and against which the said element (20, 20') for absorbing energy bears.

15. A rotor aircraft, preferably a helicopter, comprising a structure (6) on which at least one main gearbox (5) for driving in rotation at least one principal rotor (1) of the rotor craft (H) is suspended by a plurality of suspension rods (7a, 7b) each of which is connected in articulated manner at one end (15, 15') to the said gearbox (5) and at its other end (16, 16') to the said structure (6), **characterised in that** at least one of the said suspension rods (7a, 7b) is a connecting rod (13, 13') for absorbing energy in accordance with any one of Claims 1 to 14.

**Patentansprüche**

1. Energieabsorbierender Verbindungsstab, der zur Verbindung von zwei Organen (5, 6) bestimmt ist und zwischen den Organen (5, 6) axial zug- und druckbeaufschlagt werden kann, wobei der Stab (13, 13') einen im Wesentlichen geradlinigen, steifen Körper (14, 14') aufweist, der an einem seiner beiden axialen Enden mit Mitteln (16, 16') zur Verbindung mit einem der Organe (5, 6) versehen ist und mindestens einen ausgehöhlten Abschnitt (19, 19') aufweist, der mindestens ein durch plastische Druckverformung energieabsorbierendes Element (20, 20') und mindestens einen Kolben (23, 23') aufnimmt, der sich in dem ausgehöhlten Abschnitt (19, 19') gegenüber dem energieabsorbierenden Element (20, 20') befindet und mit Mitteln (15, 15') zur Verbindung mit dem anderen der Organe (5, 6) in Verschiebung fest verbunden ist, so dass unter einer Druckkraft, die höher ist als ein Druckschwellwert, der Verbindungsstab (13, 13') sich axial verkürzt und eine derartige Verschiebung des Kolbens (23, 23') bewirkt, dass der Kolben (23, 23') das energieabsorbierende Element (20, 20') zusammenquetscht und plastisch verformt, **dadurch gekennzeichnet, dass** der Körper (14, 14') weiter mindestens einen Knickabschnitt (17, 17') mit kalibrierter Knickkraft aufweist, die dem Druckkraft-Schwellwert entspricht, und dass der Kolben (23, 23') ebenfalls in Verschiebung fest mit einem steifen axialen Endbereich (18, 18') des Körpers (14, 14') verbunden ist, so dass unter einer Druckkraft, die höher ist als die kalibrierte Knickkraft, der mindestens eine Knickabschnitt (17, 17') sich verformt, wobei er die axiale Verkürzung des Verbindungsstabs (13, 13') und die Verschiebung des Kolbens (23, 23') mit dem steifen axialen Endbereich (18, 18') des Körpers nach sich zieht, um das energieabsorbierende Element (20, 20') zusammenzuquetschen und plastisch zu verformen.

2. Verbindungsstab nach Anspruch 1, **dadurch gekennzeichnet, dass** der Kolben (23, 23') während des Knickens des Knickabschnitts (17, 17') des Körpers (14, 14') durch Führungsmittel (24, 24', 26) im Körper (14, 14') im Wesentlichen axial geführt wird.

3. Verbindungsstab nach Anspruch 2, **dadurch gekennzeichnet, dass** die Führungsmittel des Kolbens (23, 23') eine steife Stange (24, 24') aufweisen, die den Kolben (23, 23') mit dem steifen axialen Endbereich (18, 18') des Körpers (14, 14') verbindet und sich im Wesentlichen axial in einem rohrförmigen Bereich (17-26; 17') des Körpers erstreckt, um die Verschiebungen des Kolbens (23, 23') bezüglich des energieabsorbierenden Elements (20, 20') im Wesentlichen axial zu führen.

4. Verbindungsstab nach Anspruch 3, **dadurch gekennzeichnet, dass** der die mit dem Kolben (23, 23') verbundene steife Stange (24, 24') führende rohrförmige Bereich (17-26, 17') des Körpers (14, 14') mindestens zum Teil den Knickabschnitt (17, 17') definiert.

5. Verbindungsstab nach einem der Ansprüche 1 bis 4, **dadurch gekennzeichnet, dass** der Knickabschnitt (17, 17') durch mindestens eine lokale Verdünnung (25, 25') der Dicke der rohrförmigen Wand des Körpers (14, 14') begrenzt wird.

6. Verbindungsstab nach Anspruch 5, **dadurch gekennzeichnet, dass** die lokale Verdünnung der Dicke durch mindestens eines der folgenden Mittel definiert wird: Einschnitt (25, 25'), Rille, Schlitz, Riefe, die im Wesentlichen axial sind, gewelltes axiales Profil und Loch in der Wand des Körpers (14, 14').

7. Verbindungsstab nach einem der Ansprüche 1 bis 6, **dadurch gekennzeichnet, dass** der Knickbereich (17, 17') zumindest zum Teil aus einem anderen Material besteht als dasjenige, das den Rest des Körpers (14,14') des Stabs (13,13') bildet.

8. Verbindungsstab nach einem der Ansprüche 1 bis 7, **dadurch gekennzeichnet, dass** der Knickabschnitt (17, 17') zumindest zum Teil aus einem Material besteht, das einer besonderen Behandlung unterzogen wurde, durch die seine Eigenschaften sich von denen des Rests des Körpers (14, 14') des Stabs (13, 13') unterscheiden.

9. Verbindungsstab nach einem der Ansprüche 1 bis 8, **dadurch gekennzeichnet, dass** der Knickabschnitt (17, 17') eine geeignete geometrische Form aufweist, um das Knicken auszulösen und zu lokalisieren.

10. Verbindungsstab nach einem der Ansprüche 1 bis 9, **dadurch gekennzeichnet, dass** das mindestens eine energieabsorbierende Element (20, 20') Eigenschaften des Zusammenquetschens bei im Wesentlichen konstanter Krafteinwirkung aufweist, so dass der Verbindungsstab (13, 13') eine Spitzenbegrenzung der Kraft gewährleistet.

11. Verbindungsstab nach einem der Ansprüche 1 bis 10, **dadurch gekennzeichnet, dass** das energieabsorbierende Element (20, 20') mindestens ein Element mit Wabenstruktur aufweist, dessen aneinander grenzende Waben im Körper (14, 14') im Wesentlichen axial ausgerichtet sind, und das vorzugsweise aus Metall oder einem Verbundmaterial besteht.

12. Verbindungsstab nach einem der Ansprüche 1 bis 11, **dadurch gekennzeichnet, dass** das energieabsorbierende Element (20, 20') mindestens ein Elastomermaterial und/oder ein Volumen eines vorzugsweise viskosen Fluids und/oder ein Verbundmaterial aufweist, das mindestens ein organisches Material und/oder mindestens ein Keramikmaterial und/oder mindestens ein metallisches Material enthält.

13. Verbindungsstab nach einem der Ansprüche 1 bis 12, **dadurch gekennzeichnet, dass** der ausgehöhlte Abschnitt des Körpers (14, 14') ein anderer hohler oder rohrförmiger Bereich (19, 19') des Körpers ist, der das mindestens eine energieabsorbierende Element (20, 20') umschließt.

14. Verbindungsstab nach Anspruch 13, **dadurch gekennzeichnet, dass** der Bereich des Körpers (14, 14'), der das energieabsorbierende Element (20, 20') umschließt, ein aufgebauchter Bereich (19, 19') des Körpers ist, der auf der dem Kolben (23, 23') entgegengesetzten Seite von einem Boden (22, 22') begrenzt wird, der fest mit dem anderen steifen Endbereich (16, 16') des Körpers (14, 14') verbunden ist und gegen den das energieabsorbierende Element (20, 20') aufliegt.

15. Drehflügel-Flugzeug, vorzugsweise ein Hubschrauber, das eine Struktur (6) aufweist, an der mindestens ein Hauptgetriebegehäuse (5) für den Drehantrieb mindestens eines Hauptrotors (1) des Drehflügel-Flugzeugs (H) über mehrere Aufhängestäbe (7a, 7b) aufgehängt ist, von denen jeder gelenkig über ein Ende (15, 15') mit dem Getriebegehäuse (5) und über das andere Ende (16, 16') mit der Struktur (6) verbunden ist, **dadurch gekennzeichnet, dass** mindestens einer der Aufhängestäbe (7a, 7b) ein Verbindungsstab (13, 13') mit Energieabsorption nach einem der Ansprüche 1 bis 14 ist.

FIG.1.
ART ANTÉRIEUR

FIG.2.
ART ANTÉRIEUR

FIG.5.

FIG.4.

FIG.3.

FIG.6.

FIG.7.

EP 1 291 545 B1